Europäisches Patentamt

European Patent Office

Office européen des brevets

(11) Veröffentlichungsnummer: **0 344 762 B1**

(12) **EUROPÄISCHE PATENTSCHRIFT**

(45) Veröffentlichungstag der Patentschrift: **25.11.92**

(51) Int. Cl.⁵: **B62D 55/14**

(21) Anmeldenummer: **89109882.4**

(22) Anmeldetag: **01.06.89**

(54) **Lauf- oder Umlenkrolle für Gleiskettenfahrwerke.**

(30) Priorität: **03.06.88 DE 3818841**

(43) Veröffentlichungstag der Anmeldung:
**06.12.89 Patentblatt 89/49**

(45) Bekanntmachung des Hinweises auf die
Patenterteilung:
**25.11.92 Patentblatt 92/48**

(84) Benannte Vertragsstaaten:
**AT BE CH DE ES FR GB IT LI NL SE**

(56) Entgegenhaltungen:
**DE-A- 3 537 665**
**DE-C- 737 756**
**DE-U- 7 042 696**
**FR-A- 2 129 192**

(73) Patentinhaber: **DIEHL GMBH & CO.**
**Stephanstrasse 49**
**W-8500 Nürnberg(DE)**

(72) Erfinder: **Erlenmaier, Günter**
**Espenauer Strasse 20**
**W-3502 Vellmar(DE)**
Erfinder: **Spies, Klaus**
**Am hohen Wald 27**
**W-5630 Remscheid(DE)**

Rank Xerox (UK) Business Services

# Beschreibung

Die Erfindung bezieht sich auf eine Lauf- oder Umlenkrolle für Gleiskettenfahrwerke nach dem Oberbegriff des Anspruches 1.

Aus der DE-A-3 515 918 ist ein Laufrad für Kettenfahrzeuge bekannt, bei dem zwei miteinander verbundene Scheiben einen Zylinderbereich und dazwischen einen Führungsspalt für die Kettenzähne aufweisen. Das Dämpfungsvermögen des Laufrades ist hierbei auf die am Umfang angeordneten Gummibandagen beschränkt.

Aus der dem Oberbegriff des Hauptanspruchs entsprechenden FR-A-2 129 192 ist ein anderes Laufrad für Kettenfahrzeuge bekannt, deren Radscheiben mit einer umlaufenden Ausnehmung versehen sind, deren seitlichen Wände rechtwinklig zur Drehachse der Radscheiben liegen, wobei daran anschließend eine konische Ausnehmung folgt. Jede Radscheibe ist mit einer L-förmigen Felge versehen. Die Felgen tragen die Gummibandagen. Zwischen den Felgen und den Radscheiben sind Gummischeiben vorgesehen. Zwischen den radialen Schenkeln der Felgen und den entsprechenden radialen Abschnitten der Ausnehmung sind ebenfalls Gummischichten angeordnet. Die radialen Schenkel mindern den seitlichen Verschleiß der Radscheiben beim Eingriff der Kettenzähne in die Ausnehmung. Die genannten Gummischichten sind entsprechend den Felgen L-förmig ausgebildet.

Aufgabe der Erfindung ist es, eine Lauf- oder Umlenkrolle für Gleiskettenfahrwerke vorzuschlagen, bei der die federnde und dämpfende Aufnahme von vertikalen Krafteinwirkungen, z.B. aus Fahrbahn-Unebenheiten, wesentlich gesteigert ist, und bei der der Verschleiß der Kontaktflächen von Fühtungszähnen und Felgen vermindert ist.

Die Erfindung löst diese Aufgabe entsprechend den kennzeichnenden Merkmalen des Hauptanspruches.

Vorteilhafte Weiterbildungen der Erfindung sind den Unteransprüchen zu entnehmen.

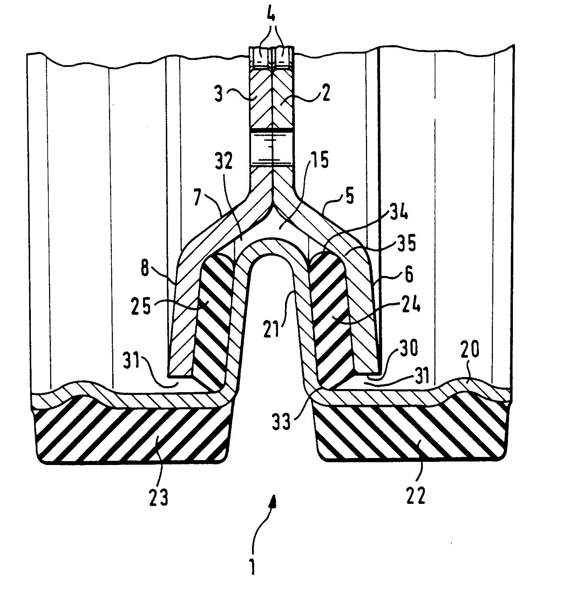

Die Vorteile der Erfindung sind anhand eines in der Zeichnung dargestellten Ausführungsbeispiels näher erläutert.

Die einzige Figur zeigt:
einen Teilquerschnitt durch ein Laufrad.

Ein Laufrad 1 besteht aus zwei, durch nicht gezeichnete Schraubverbindungen miteinander verbundene Radscheiben 2 und 3, Bohrungen 4 für eine nicht gezeichnete Nabe, zweifach konisch abgewinkelten Abschnitten 5, 7 der Radscheiben 2 und 3 zur Bildung einer zweistufigen konischen Ausnehmung 15, einer einstückigen Felge 20 mit Hohlrippe 21 und Gummibandagen 22 und 23 und aus zwei seitlich der Hohlrippe 21 angeordneten Ringfedern 24, 25.

Die Felge 20 ist mit den Gummibandagen 22, 23 und den Ringfedern 24, 25 durch Vulkanisation verbunden.

Zwischen dem jeweiligen stirnseitigen Rand 30 der Radscheiben 2, 3 bzw. deren Abschnitten 6 und 8 ist zu der Felge 20 jeweils ein radialer Abstand 31 vorgesehen. Dieser Abstand 31 stellt den radialen Einfederungsweg zwischen Felge und Radscheiben dar, wobei der Rand 30 bei maximaler Einfederung an der Felge 20 anschlägt, da der radiale Abstand 32 größer ist als der Abstand 31.

Die Ringfedern 24, 25 liegen jeweils über einem Radius 33, 34 sowohl am Fuß der Hohlrippe 21 als auch im Knick 35 der Abschnitte 5, 6 der Radscheibe 2, 3 an. Die Ringfedern 24 und 25 können auch lose zwischen der Felge 20 und den Radscheiben 2, 3 eingelegt sein.

Anstelle der Schraubverbindungen können die Radscheiben 2, 3 auch miteinander verschweißt oder vernietet sein.

Mit der Erfindung wird eine maximale federnde und dämpfende Aufnahme von vertikalen Krafteinwirkungen, z.B. aus Fahrbahn-Unebenheiten, erreicht.
Wesentlich ist auch, daß der Isolationsgrad gegenüber eingeleiteten Störungen erhöht ist.

Die Trennung der Bandagenfunktion in Laufreifen und Feder, nämlich in die Gummibandagen 22, 23 und in die Ringfedern 24, 25, ermöglicht, die Bandagen vorrangig nach struktur-mechanischen Gesichtspunkten auszulegen.

Diese Gesichtspunkte betreffen den Einreiß-, Weiterreiß- und Abrieb-Widerstand.
Auch wird durch die Trennung der Bandagenfunktion eine wesentlich bessere Wirkung bei der federnden und dämpfenden Aufnahme von Horizontalkräften und -stössen aus fahrdynamischen Vorgängen, z.B. bei Schräghang-, Kurvenfahrt oder auch bei Lenkkorrekturen, erreicht. Weiterhin liegt eine Reduzierung der in die Radscheiben eingeleiteten Schwingungsenergie und des von diesen abgestrahlten Luftschalles vor.

Daneben ist durch die Schwenkmöglichkeit der Felge mit federnder Winkelbegrenzung die Gefahr der Deformierung der Felge 20 und auch die Tendenz zum Herauslaufen des Fahrzeuges aus der Kette reduziert.

Die Möglichkeit der federnden Bewegung der Felge in allen Freiheitsgraden vermindert den Verschleiß der Kontaktflächen von nicht gezeichneten Führungszähnen und der Felge 20.

Die Ringfedern 24, 25 erlauben den federnden Radialanschlag von der Felge 20 an den Radscheiben 2, 3.

Die Trennung von Felge 20 und Radscheiben 2, 3 erlaubt die Austauschbarkeit von Radteilen, insbesondere von der Felge 20 und den Ringfedern 24, 25. Auch liegt die Freizügigkeit in der Auswahl unterschiedlicher, jeweils optimaler Werkstoffe und Herstellverfahren für Felge und Radscheibe, z.B. Stahl, Aluminium und für die Bandage 22, 23 und Ringfeder 24, 25, z.B. Polyurethan und Naturkautschuk vor.

Mit der Erfindung werden die Schwingungs- und Stoßbelastungen auf die den Laufrollen nachgeschalteten Teile, wie z.B. Schwinge, Schwingenlagerung, Wanne, Fahrzeugeinbauten, wesentlich reduziert.

Auch verbessert sich bei einem Kampffahrzeug die Beobachtungsfähigkeit und Zielgenauigkeit sowie die Führbarkeit des damit ausgerüsteten Fahrzeuges. Gleichzeitig liegt eine gegenüber dem Stand der Technik reduzierte Kampfbeeinträchtigung der Fahrzeugbesatzung durch störende Schwingungen und Geräusche vor.

Wesentlicher Gedanke der Erfindung ist die Teilung der Laufrolle in Radscheiben 23, 24, die Felge 20 und in elastische Ringfedern 23, 24.

Das vorbeschriebene Laufrad eignet sich neben Gleisketten nach dem Verbinderprinzip auch für sämtliche andere Kettenarten für Fahrzeuge, bspw. für Bandketten, Scharnierketten.
Auch ist die Erfindung einsetzbar für Umlenkrollen und Stützrollen.

**Patentansprüche**

1. "Lauf- oder Umlenkrolle für Gleiskettenfahrwerke, bestehend aus zwei mit einer Nabe verbindbaren Radscheiben (2, 3), die umfangseitig konisch abgewinkelte Abschnitte (5, 7) aufweisen und damit eine umlaufende Ausnehmung (15) für die Kettenzähne bilden, aus einem L-förmigen Flansch einer Felge (20) pro Radscheibe (2,3), aus einer jeweils eine Ringfeder (24, 25) darstellenden elastischen Gummischicht zwischen einem an den konischen Abschnitt (5, 7) anschließenden radialen Abschnitt (6, 8) der Radscheibe (2, 3) und einem radialen Abschnitt (Hohlrippe 21) des Flansches, und aus zwei an zylindrischen Bereichen der Felge (20) angeordneten Gummibandagen (22, 23),
dadurch gekennzeichnet, daß
die Felge (20) einstückig ist und mit einer die L-förmigen Flansche verbindenden, entsprechend schmaleren Hohlrippe (21) in die umlaufende Ausnehmung (15) hineinragt.

2. Lauf- oder Umlenkrolle nach Anspruch 1,
dadurch gekennzeichnet,
daß die Ausnehmung (15) etwa einen zweistufigen konischen Querschnitt aufweist.

3. Lauf- oder Umlenkrolle nach Anspruch 1,
dadurch gekennzeichnet,
daß der Rand (30) der Radscheiben (2,3) durch die Ringfedern (24,25) in einem radialen Abstand (31) von der Felge (20) liegt.

4. Lauf- oder Umlenkrolle nach Anspruch 1,
dadurch gekennzeichnet,
daß die Ringfedern (24,25) mit der Feige (20) durch Vulkanisation verbunden sind.

5. Lauf- oder Umlenkrolle nach Anspruch 1,
dadurch gekennzeichnet,
daß die Ringfedern (24,25) mit den Radscheiben (2,3) durch Vulkanisation verbunden sind.

6. Lauf- oder Umlenkrolle nach Anspruch 1,
dadurch gekennzeichnet,
daß die Ringfedern (24,25) mit der Felge (20) und mit den Radscheiben (2,3) durch Vulkanisation miteinander verbunden sind.

7. Lauf- oder Umlenkrolle nach Anspruch 1,
dadurch gekennzeichnet,
daß die Ringfedern (24,25) zwischen der Hohlrippe (21) der Felge (20) und den äußeren Abschnitten (6,8) der Radscheiben (2,3) lose eingelegt sind.

8. Lauf- oder Umlenkrolle nach Anspruch 1 oder 2,
dadurch gekennzeichnet,
daß die Ringfedern (24,25) vollflächig an den geraden Abschnitten der Hohlrippe (21) und den Abschnitten (6,8) der Radscheiben (2,3) anliegen,
wobei die Ringfedern (24,25) jeweils über einen Radius (33,34) sowohl am Fuß der Hohlrippe (21) als auch im Knick (35) der Abschnitte (5,6) der Radscheibe (2,3) anliegen bzw. anstossen.

9. Lauf- oder Umlenkrolle nach Anspruch 1 oder 3,
dadurch gekennzeichnet,
daß ein Abstand (32) zwischen der Hohlrippe (21) und den Radscheiben (2,3) größer ist, als der Abstand (31) zwischen dem Rand (30) und der Felge (20).

**Claims**

1. A running or guide roller for caterpillar track chassis, consisting of two wheel discs (2,3) which are connectable to a hub and which have peripherally conically elbowed portions (5,7) and thus form an encircling recess (15) for the track teeth, of one L-shaped flange of a rim (20) per wheel disc (2,3), of an elastic rubber layer, respectively representing an annular spring (24,25), between a radial portion (6,8) of the wheel disc (2,3) adjoining the conical portion (5,7) and a radial portion (hollow rib 21) of the flange, and of two rubber tyres (22,34) arranged on cylindrical regions of the rim (20), characterised in that the rim (20) is in one piece and projects with a correspondingly narrower hollow rib (21), connecting the L-shaped flanges, into the encircling recess (15).

2. A running or guide roller according to Claim 1, characterised in that the recess (15) has approximately a two-stage conical cross-section.

3. A running or guide roller according to Claim 1, characterised in that the edge (20) of the wheel discs (2,3) lies as a result of the annular springs (24,25) at a radial spacing (31) from the rim (20).

4. A running or guide roller according to Claim 1, characterised in that the annular springs (24,25) are connected to the rim (20) by vulcanisation.

5. A running or guide roller according to Claim 1, characterised in that the annular springs (24,25) are connected to the wheel discs (2,3) by vulcanisation.

6. A running or guide roller according to Claim 1, characterised in that the annular springs (24,25) are connected to the rim (20) and to the wheel discs (2,3) by vulcanisation.

7. A running or guide roller according to Claim 1, characterised in that the annular springs (24,25) are inserted loosely between the hollow rib (21) of the rim (20) and the outer portions (6,8) of the wheel discs (2,3).

8. A running or guide roller according to Claim 1 or 2, characterised in that the annular springs (24,25) butt in a full-surface manner against the straight portions of the hollow rib (21) and the portions (5,7) of the wheel discs (2,3), in which respect the annular springs (24,25) respectively butt or respectively border by way of a radius (33,34) both against the foot of the hollow rib (21) and in the kink (35) of the portions (5,6) of the wheel disc (2,3).

9. A running or guide roller according to Claim 1 or 3, characterised in that a spacing (32) between the hollow rib (21) and the wheel discs (2,3) is greater than the spacing (31) between the edge (30) and the rim (20).

**Revendications**

1. Roue de roulement ou de renvoi pour trains de roulement à chenilles, constitué de deux disques de roue (2, 3) à assembler à un moyeu, qui présentent sur leur pourtour des parties (5, 7) coudées coniquement et forment donc un évidement (15) tout autour pour les dents des chaînes, constitué d'une bride en L d'une jante (20) par disque de roue (2, 3), constitué d'une couche de caoutchouc élastique, formant dans chaque cas un ressort annulaire (25, 26) entre une partie radiale (6, 8) du disque de roue (2, 3), se raccordant à la partie conique (5, 7), et une partie radiale (nervure creuse 21) de la bride, et constitué de deux bandages de caoutchouc (22, 23) placés sur des zones cylindriques de la jante (20), caractérisé en ce que la jante (20) est d'une seule pièce et s'engage dans l'évidement (15) de pourtour, par une nervure creuse (21) plus étroite, reliant les brides en L.

2. Roue de roulement ou de renvoi selon la revendication 1, caractérisé en ce que l'évidement (15) présente une section transversale conique, à deux étages.

3. Roue de roulement ou de renvoi selon la revendication 1, caractérisé en ce que le bord (30) des disque de roue (2, 3) se situe à une distance radiale (31) de la jante (20), du fait des ressorts annulaires (24, 25).

4. Roue de roulement ou de renvoi selon la revendication 1, caractérisé en ce que les ressorts annulaires (24, 25) sont assemblés à la jante (20) par vulcanisation.

5. Roue de roulement ou de renvoi selon la revendication 1, caractérisé en ce que les ressorts annulaires (24, 25) sont assemblés par vulcanisation au disque de roue (2, 3).

6. Roue de roulement ou de renvoi selon la revendication 1, caractérisé en ce que les ressorts annulaires (24, 25) avec la jante (20) et les disques de roue (2, 3) sont assemblés entre eux par vulcanisation.

7. Roue de roulement ou de renvoi selon la revendication 1, caractérisé en ce que les ressorts annulaires (24, 25) sont placés librement entre la nervure creuse (21) de la jante (20) et les parties extérieures (6, 8) des disques de roue (2, 3).

8. Roue de roulement ou de renvoi selon la revendication 1 ou 2, caractérisé en ce que les

ressors annulaires (24, 25) s'appliquent sur toute leur surface contre les parties droites de la nervure creuse (21) et les parties (6, 8) des disques de roue (2, 3), les ressorts annulaires (24, 25) s'appliquant ou venant heurter, sur un rayon (33, 34), contre le pied de la nervure creuse (21) ainsi que dans la pliure (35) des parties (5, 6) du disque de roue (3, 3).

9.  Roue de roulement ou de renvoi selon la revendication 1 ou 3, caractérisé en ce que la distance (32) séparant la nervure creuse (21) des disques de roue (2, 3) est supérieure à la distance (31) séparant le bord (30) de la jante (20).